Europäisches Patentamt

European Patent Office

Office européen des brevets

(11) Numéro de publication: **0 286 537**
**A1**

(12)

# DEMANDE DE BREVET EUROPEEN

(21) Numéro de dépôt: 88400834.3

(22) Date de dépôt: **07.04.88**

(51) Int. Cl.⁴: **B 60 R 1/08**

(30) Priorité: **10.04.87 FR 8705081**

(43) Date de publication de la demande:
**12.10.88 Bulletin 88/41**

(84) Etats contractants désignés:
**AT BE CH DE ES GB GR IT LI NL SE**

(71) Demandeur: **Chauche, Jean-Pierre Gustave**
**15, rue de Bellevue**
**F-93600 Aulnay sous Bois (FR)**

(72) Inventeur: **Chauche, Jean-Pierre Gustave**
**15, rue de Bellevue**
**F-93600 Aulnay sous Bois (FR)**

(74) Mandataire: **Vander-Heym, Serge**
**CABINET R. VANDER-HEYM 172, Boulevard Voltaire**
**F-75011 Paris (FR)**

(54) **Dispositif pour améliorer la vision vers l'arrière sur les véhicules automobiles.**

(57) Dispositif pour améliorer la vision vers l'arrière sur les véhicules automobiles, caractérisé e ce qu'il est constitué par un rétroviseur auxiliaire (1) fixé contre la face interne (2) du montant de la baie du pare-brise.

Le corps du rétroviseur est pourvu d'un bras pouvant coulisser par une de ses extrémités dans le corps dudit rétroviseur et se fixant par l'autre, par l'entremise d'une articulation à rotule, sur une embase fixée contre le montant.

*Fig.1*

EP 0 286 537 A1

## Description

La présente invention est relative à un dispositif pour améliorer la vision vers l'arrière sur les véhicules automobiles.

On sait que tous les véhicules automobiles sont équipés de rétroviseurs pour permettre au conducteur de voir les véhicules qui le suivent, sans devoir se retourner.

Pour augmenter le champ de vision, les véhicules comportent généralement un rétroviseur intérieur et un rétroviseur extérieur placé sur le côté gauche.

Même lorsque ces rétroviseurs sont bien orientés, ils ne permettent pas d'apercevoir un véhicule au moment où celui-ci effectue un dépassement. En effet, à cet instant, les deux véhicules sont très proches et le véhicule qui effectue le dépassement est situé à l'extérieur du champ de vision du rétroviseur usuel. Ce phénomène, dit "d'angle mort", est bien connu et est à l'origine de nombreux accidents.

Pour élargir le champ de vision d'un rétroviseur, on a utilisé des miroirs réfléchissants convexes, mais l'augmentation du champ est toujours restée insuffisante pour couvrir l'angle mort.

Plus récemment, on a utilisé des rétroviseurs comportant deux surfaces réfléchissantes distinctes formant entre elles un angle obtu. De cette façon, on est parvenu à créer deux champs de vision dont l'un pouvait couvrir l'angle mort.

Cependant, à l'expérience, on a constaté que l'utilisation de tels rétroviseurs était très fatiguante pour le conducteur dont les yeux recevaient, en même temps, deux images distinctes.

Le dispositif de l'invention qui remédie à ces inconvénients est constitué par un petit rétroviseur auxiliaire fixé, à l'intérieur du véhicule, sur le montant de la baie du pare-brise.

L'invention sera mieux comprise par la description qui va suivre, faite en se référant aux dessins annexés à titre d'exemple indicatif seulement, sur lesquels:

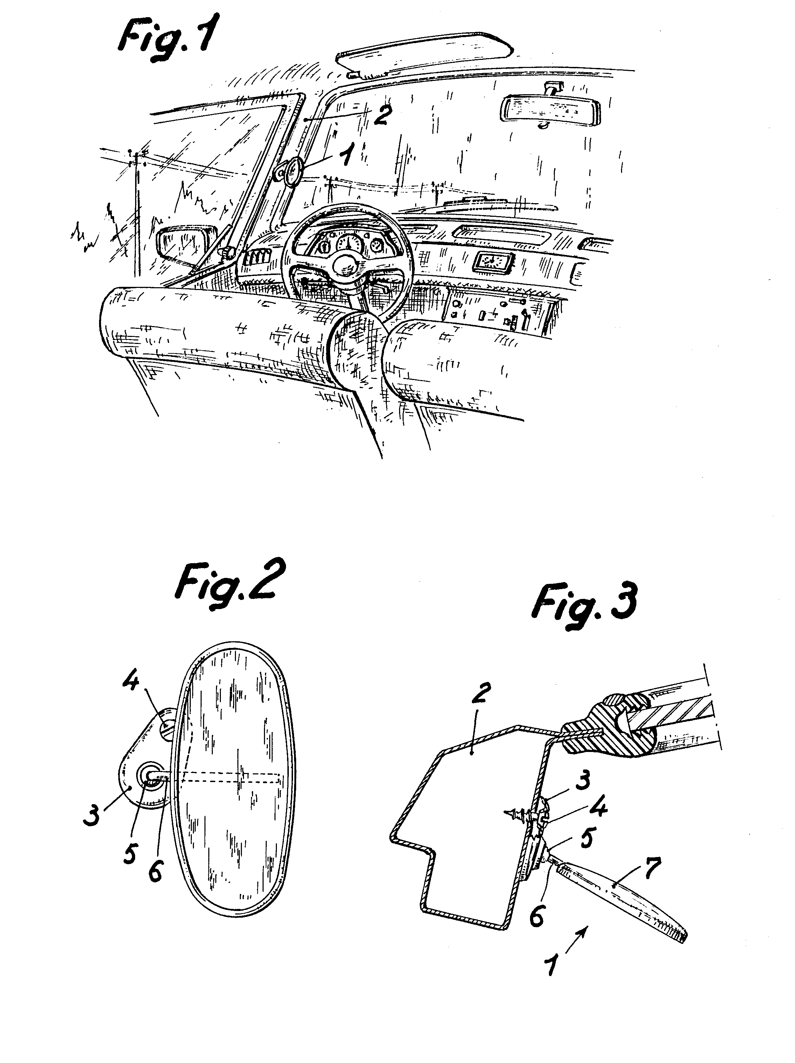

    La figure 1 est une vue partielle, en perspective, montrant l'intérieur d'un véhicule équipé du dispositif de l'invention ;

    La figure 2 est une vue en élévation d'un rétroviseur auxiliaire;

    La figure 3 est une vue partielle, en coupe horizontale, montrant la fixation du rétroviseur auxiliaire;

    La figure 4 est une vue, à petite échelle, montrant notamment le champ de vision offert au conducteur d'un véhicule à l'aide du dispositif de l'invention.

En se reportant aux dessins, on voit que le dispositif de l'invention est constitué par un petit rétroviseur auxiliaire 1, fixé, à l'intérieur du véhicule, contre le montant 2 de la baie du pare-brise.

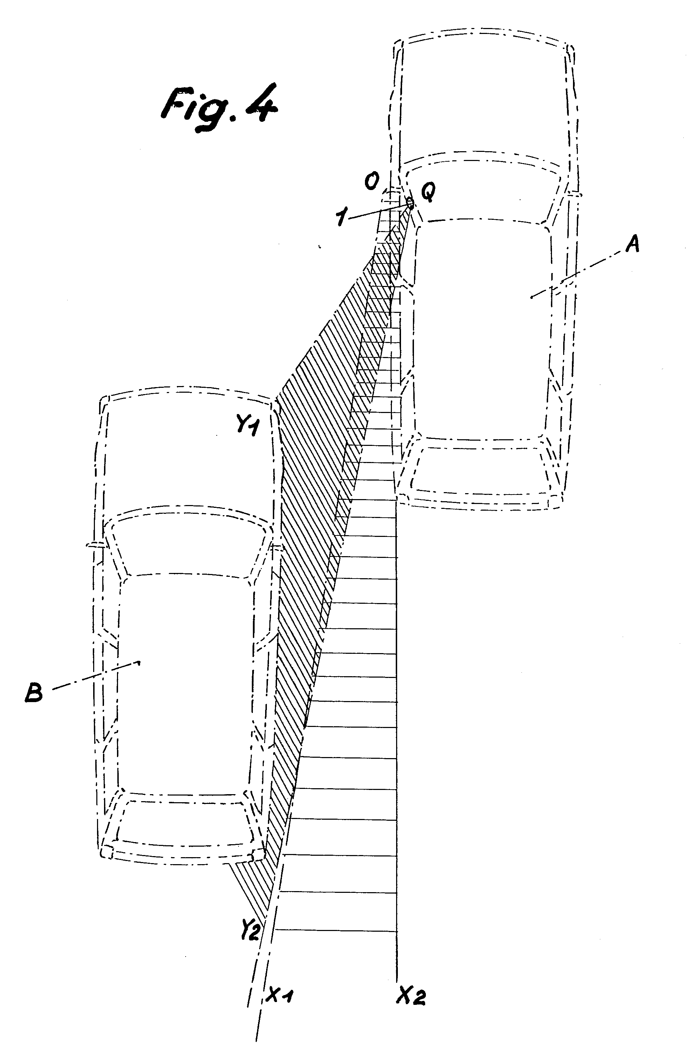

Si on se reporte à la figure 4, on voit que le rétroviseur extérieur permet la vision selon un champ délimité par les rayons $OX_1$ et $OX_2$.

Si un véhicule B effectue un dépassement, on constate que, lorsqu'il est relativement proche du véhicule A, il sort du champ de vision délimité par les rayons précités. Dans ce cas, il est de coutume de dire que le véhicule B se trouve dans "l'angle mort" du véhicule A ce qui signifie qu'à cet instant le conducteur dudit véhicule A ne peut pas apercevoir le véhicule B. A ce moment, si le véhicule A change de voie et se déboîte vers l'extérieur, l'accident est inévitable.

Le rétroviseur 1 du dispositif de l'invention, lorsqu'il est convenablement orienté, permet d'élargir considérablement le champ de vision comme cela ressort de la figure 4 et, notamment, d'apercevoir le véhicule B qui se trouve dans l'angle mort du véhicule A, ledit angle mort étant défini approximativement par les demi-droites $QY_1$ et $QY_2$.

Selon un mode de réalisation, tel que montré sensiblement à l'échelle 1 sur la figure 2, le rétroviseur 1 comporte une embase 3 pouvant se fixer à l'aide d'une vis 4 contre la face interne du montant 2.

L'embase 3 emprisonne partiellement une rotule 5 se prolongeant par un bras 6.

Le rétroviseur proprement dit est constitué par une surface plane, réfléchissante, maintenue dans un corps 7.

Le bras 6 pénètre dans le corps 7, sensiblement parallèlement à la surface réfléchissante et coulisse dans ce dernier pour modifier la distance séparant le montant et ladite surface.

Bien entendu la présente invention ne se limite pas au mode de réalisation décrit et représenté mais s'étend, au contraire, à toutes variantes de formes et dimensions.

## Revendications

1-Dispositif pour améliorer la vision vers l'arrière sur les véhicules automobiles, du genre de ceux utilisant un réflecteur auxiliaire fixé à l'intérieur du véhicule, caractérisé en ce que le réflecteur est fixé contre la face interne du montant de la baie du pare-brise.

2-Dispositif pour améliorer la vision vers l'arrière sur les véhicules automobiles, selon la revendication 1, caractérisé en ce que le corps du rétroviseur est pourvu d'un bras pouvant coulisser par une de ses extrémités dans le corps dudit rétroviseur et se fixant par l'autre, par l'entremise d'une articulation à rotule, sur une embase fixée contre le montant.

Fig.1

Fig.2

Fig.3

0286537

0286537

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 601 911  (SCHLAG)<br>* Page 2, lignes 21-30; figure *<br>--- | 1 | B 60 R    1/08 |
| A | EP-A-0 028 370  (BMW AG)<br>* Revendication 1; figure 1 *<br>--- | 1 | |
| A | FR-A-2 369 123  (BACKENKOHLER)<br>* Page 2, lignes 13-38; figures 1-3 *<br>--- | 1,2 | |
| A | DE-A-3 223 718  (BRAUNHOLZ)<br>* En entier *<br>--- | 1 | |
| A | DE-C- 936 076  (VOGT)<br>* Page 4, lignes 25-43; figure 1 *<br>----- | 2 | |

DOMAINES TECHNIQUES RECHERCHES (Int. Cl.4)

B 60 R

Le présent rapport a été établi pour toutes les revendications

| Lieu de la recherche | Date d'achèvement de la recherche | Examinateur |
|---|---|---|
| LA HAYE | 28-06-1988 | MAUSSER,T. |